# EUROPÄISCHE PATENTANMELDUNG

(11) **EP 2 556 952 A1**
(43) Veröffentlichungstag der Anmeldung: **13.02.2013**
(21) Anmeldenummer: 11176900.6
(22) Anmeldetag: 09.08.2011
(51) Int. Cl.: B32B 5/02, B32B 21/10

(54) **Platte**

(71) Anmelder: Hofer Parkett Handels GmbH, 1100 Wien (AT)
(72) Erfinder: Hofer, Christian, 2523 Tattendorf (AT)
(74) Vertreter: Schneider, Michael

(57) **Zusammenfassung**

Platte (1), insbesondere eine Bodenplatte oder Bodenbelagsplatte, aufweisend eine Trägerplatte (2), insbesondere ausweisend eine holzbasierte Multiplexplatte und/oder mitteldichte Faserplatte, die durch eine Oberseite (3) und eine Unterseite (4) und zumindest eine zwischen der Oberseite (3) und der Unterseite (4) verlaufende erste Randseite (5) und eine zweite Randseite (6) begrenzt ist, und ein auf die Trägerplatte (2) aufgebrachtes Kohlefasergewebe (19), wobei ein Übergangsbereich (11, 12) zwischen der Oberseite (3) und der jeweiligen Randseite(5, 6) in seinem Querschnitt einer Kurve oder einer an eine Kurve angenäherten Form folgt und sich das Kohlefasergewebe (19) entlang der Oberseite (3) und bis über einen am weitesten außen liegenden Scheitelpunkt (16) der Kurve oder der an die Kurve angenäherten Form hinweg erstreckt.

## Beschreibung

### TECHNISCHES FELD

Die Erfindung betrifft eine Platte.

Die Erfindung betrifft ein Verfahren zur Herstellung einer Platte.

Die Erfindung betrifft weiterhin eine Vorrichtung zum Herstellen einer Platte.

### HINTERGRUND

Eine eingangs erwähnte Platte ist beispielsweise in Form eines Parkettbodenelements bekannt.

Ein solches Element weist eine Trägerplatte und eine darauf angebrachte eine Beschichtung bildende Nutz- bzw. Sichtschicht, welche zugleich die vordere (sichtbare) Außenschicht des Elements bildet, auf. Diese Außenschicht ist üblicherweise durch eine Edelholzauflage gebildet, die geölt oder lackiert ist.

Die Trägerplatte ist oft als eine sogenannte Multiplexplatte und/oder mitteldichte Faserplatte (MFD) realisiert. Eine nicht sichtbare Außenschicht bildende hinterste Holzlage der Trägerplatte realisiert eine Auflage- oder Montagefläche.

Solche Elemente sind relativ einfach zu einer Gesamtfläche bzw. einem Bodenbelag zu verbinden. Der Einsatzbereich solcher Elemente ist oft auf einen Wohnraum oder gewerbliche Räumlichkeiten beschränkt, wo eine optische Auflockerung durch eine Maserung der Edelholzauflage erwünscht ist.

Die Erfindung hat sich die Aufgabe gestellt eine verbesserte Platte bereitzustellen, deren Einsatzbereich über den bekannter Einsatzbereiche hinausgeht. Zudem ist es auch eine Aufgabe der Erfindung, ein Verfahren zu ihrer Herstellung sowie eine Vorrichtung zum Herstellen einer solchen Platte bereitzustellen.

### ZUSAMMENFASSUNG DER ERFINDUNG

Diese Aufgabe wird durch eine Platte gemäß Anspruch 1, ein Verfahren gemäß Anspruch 9 sowie durch eine Vorrichtung gemäß Anspruch 12 gelöst.

Der Gegenstand der Erfindung ist daher eine Platte, insbesondere eine Bodenplatte, aufweisend eine Trägerplatte, insbesondere aufweisend eine holzbasierte Multiplexplatte und/oder mitteldichte Faserplatte, die durch eine Oberseite und eine Unterseite und zumindest eine zwischen der Oberseite und der Unterseite verlaufende erste Randseite und eine zweite Randseite begrenzt ist, und ein auf die Trägerplatte aufgebrachtes Kohlefasergewebe, wobei ein Übergangsbereich zwischen der Oberseite und der jeweiligen Randseite in seinem Querschnitt einer Kurve oder einer an eine Kurve angenäherten Form folgt und sich das Kohlefasergewebe entlang der Oberseite und bis über einen am weitesten außen liegenden Scheitelpunkt der Kurve oder der an die Kurve angenäherten Form hinweg erstreckt.

Zudem ist der Gegenstand der Erfindung ein Verfahren zum Herstellen einer Platte, insbesondere einer Bodenplatte, wobei die Platte eine Trägerplatte, insbesondere aufweisend eine holzbasierte Multiplexplatte und/oder mitteldichte Faserplatte, aufweist und die Trägerplatte durch eine Oberseite und eine Unterseite und zumindest eine zwischen der Oberseite und der Unterseite verlaufende erste Randseite und eine zweite Randseite begrenzt ist und ein Übergangsbereich zwischen der Oberseite und der jeweiligen Randseite in seinem Querschnitt einer Kurve oder einer an eine Kurve angenäherten Form folgt und besagte Kurve oder besagte an die Kurve angenäherte Form einen am weitesten außen liegenden Scheitelpunkt aufweist, wobei das Verfahren die folgenden Verfahrenschritte aufweist, nämlich Aufbringen eines Kohlefasergewebes auf besagte Trägerplatte derart, dass sich das Kohlefasergewebe entlang der Oberseite und bis über besagten Scheitelpunkt hinweg erstreckt.

Zudem ist der Gegenstand der Erfindung eine Vorrichtung zum Herstellen einer Platte, insbesondere einer Bodenplatte, aufweisend
- eine Aufbringungsstufe zum Aufbringen eines Kohlefasergewebes auf eine Trägerplatte, insbesondere aufweisend eine holzbasierte Multiplexplatte und/oder eine mitteldichte Faserplatte, wobei die Trägerplatte durch eine Oberseite und eine Unterseite und zumindest eine zwischen der Oberseite und der Unterseite verlaufende erste Randseite und eine zweite Randseite begrenzt ist und ein Übergangsbereich zwischen der Oberseite und der jeweiligen Randseite in seinem Querschnitt einer Kurve oder einer an eine Kurve angenäherten Form folgt und besagte Kurve oder besagte an die Kurve angenäherte Form einen am weitesten außen liegenden Scheitelpunkt aufweist, wobei die Aufbringungsstufe derart ausgebildet ist, dass das aufgebrachte Kohlefasergewebe die Oberseite und besagten Übergangsbereich bis über besagten Scheitelpunkt hinweg abdeckt.

Eine solche Platte lässt sich beispielsweise als Wand oder Deckenverkleidung oder als Fußbodenbelag, insbesondere als Bodenplatte oder Bodenbelagplatte, sowie in einer bevorzugten Ausbildungsform als ein parkettbodenähnliches Bodenbelagselement einsetzen.

Die Trägerplatte kann beispielsweise aus Kunststoff, Metall oder Holz hergestellt sein oder eine Kombination aus solchen Materialien z.B. in Form eines Mehrschichtaufbaus aufweisen. Aus wirtschaftlichen Gründen wird beispielsweise bei der Herstellung der Trägerplatte als Fußbodenbelag Holz bevorzugt. Insbesondere in der Bodenbelagsindustrie kommen dabei mitteldichte Faserplatten (MDF-Platten) oder sogenannte holzbasierte Multiplexplatten zum Einsatz. Als Multiplexplatten werden Furnier-Sperrholzplatten bezeichnet, die aus mehreren starken Furnierlagen bestehen. Die Holzschichten werden mit Klebstoff oder faserfestem Leim verpresst und so gegeneinander in Querverleimung versperrt. Als Querverleimung bezeichnet man eine Verleimungstechnik, bei der die einzelnen Lagen mit ihrer Maserung um 90° versetzt miteinander verleimt werden. Die Trägerplatte kann z.B. als eine Multiplexplatte oder eine MDF-Platte ausgebildet sein. Es kann jedoch auch eine Kombination aus einer Multiplexplatte und einer MDF-Platte vorliegen, ggf. auch in Kombination mit anderen Platten.

Unter Kohlenstofffaser, auch Kohlefaser oder Karbonfaser genannt, versteht man industriell hergestellte Faser aus kohlenstoffhaltigen Ausgangsmaterialien, die durch Pyrolyse in graphitartig angeordneten Kohlenstoff umgewandelt werden. Sie zeichnen sich durch hohe Festigkeit und Steifigkeit bei gleichzeitiger linearer Bruchdehnung aus. Bei der Weiterverarbeitung solcher Kohlefasern werden diese zu sogenannten Rowings zusammengefasst. Die Rowings werden in der Regel zum Einsatz als Verstärkungsfasern und/oder zu Gewebematten weiter verarbeitet. Es existieren jedoch auch andere Gewebetypen. Gewebe entsprechend den verschiedenen Gewebetypen werden im Nachfolgenden kurz kollektiv Kohlefasergewebe genannt.

Mit den erfindungsgemäßen Maßnahmen geht der Vorteil einher, dass das Kohlefasergewebe im Übergangsbereich satt auf der Oberfläche der Trägerplatte aufliegt und sich somit in dem Übergangsbereich keine Blasen oder Verwerfungen und dergleichen bilden können.

Weitere, besonders vorteilhafte Ausgestaltungen und Weiterbildungen der Erfindung ergeben sich aus den abhängigen Ansprüchen sowie der nachfolgenden Beschreibung. Dabei kann das Verfahren wie auch die Vorrichtung entsprechend den abhängigen Ansprüchen zur Platte weitergebildet sein. Vorteile, die im Zusammenhang mit Merkmalen der einen Kategorie erörtert wurden, treffen analog auch für jene der anderen Kategorie zu.

Um einzelne Platten zu einer Boden-, Wand oder Deckenverkleidung zusammenzufügen ist es von Vorteil, wenn die jeweilige Randseite der Platte, insbesondere jedoch die jeweiligen Längs und Stirnseiten der Platte eine Nut aufweist. Die Nut kann grundsätzlich im Abstand zu der Kurve oder der an die Kurve angenäherten Form ausgebildet sein. Daher kann die Kurve oder die an die Kurve angenäherte Form indirekt z.B. über eine Stufe oder eine Ebene in die Nut münden. Gemäß einem bevorzugten Ausführungsbeispiel mündet jedoch die Kurve oder die an die Kurve angenäherte Form direkt in besagter Nut und das Kohlefasergewebe erstreckt sich bis in die Nut hinein. Dadurch ist sichergestellt, dass die mitunter ausgefransten Enden des Kohlefasergewebes bei der Verlegung nicht in den Sichtbereich der Platte gelangen können, weil sie mit den entsprechenden Federelementen innerhalb der Nut verpresst werden.

Besagte Kurve kann beispielsweise die Form eines Kreisbogens eines Parabelsegments oder eines Ellipsensegments aufweisen. Es können jedoch auch andere kurvenartige Formen zum Einsatz kommen. Ebenso ist es möglich, dass die Kurve durch eine an die Kurve angenäherte Form realisiert ist, wie beispielsweise eine Aneinanderreihung von ebenen Flächensegmenten. Gemäß einem bevorzugten Ausführungsbeispiel ist die Kurve durch den Bogen eines Kreissegments gegeben, welcher Bogen sich gemessen von der lotrechten Richtung in Bezug auf die Oberseite in einem Winkelbereich größer 90°, bevorzugt bis hin zu 180° erstreckt. Durch die Wahl des Winkelbereichs von größer 90 ° bis 180° ist in jedem Fall sichergestellt, dass sich die Enden des Kohlefasergewebes bis über den am Weitesten außen liegenden Scheitelpunkt des Kreisbogens erstrecken. An der Position des Scheitelpunktes verläuft in Längsrichtung der Randseite an der Außenseite des Kohlefasergewebes eine Stoßkante. Werden die Platten im Zuge des Verlegens aneinander gedrückt, so berühren sie sich entlang dieser Stoßkante. Durch die erfindungsgemäße Maßnahme ist in jedem Fall sichergestellt, dass die Enden des Kohlefasergewebes unterhalb der Stoßkante zum Liegen kommen und sich die Enden des Kohlefasergewebes im Laufe der Benutzung der Platte z.B. als Bodenbelag nicht von der Platte ablösen können oder sichtbar werden. Die Oberfläche behält also immer ihren homogenen karbonartigen Eindruck.

Die Trägerplatte weist in vielen Fällen eine Dicke von 10 bis 22 mm auf, insbesondere dann wenn es um eine Trägerplatte für eine Bodenplatte oder Bodenbelagsplatte geht. In diesem Fall hat sich ein Radius für besagtes Kreissegment im Bereich von 2 mm bis 6 mm als günstig erwiesen. In Abhängigkeit von der tatsächlichen Dicke der Trägerplatte kann auch ein Radius im Bereich von 0,5 mm bis zum Beispiel 8 mm zum Einsatz kommen. Die Wahl des geeigneten Radius wird letztendlich auch durch die mechanischen Eigenschaften des Kohlefasergewebes bestimmt. Für Kohlefasergewebe, die sich relativ leicht biegen lassen, können kleinere Werte für den Radius gewählt werden, wohingegen bei dickeren und daher oft schwieriger zu biegenden Kohlefasergeweben größere Werte für den Radius bevorzugt sein können.

Das Kohlefasergewebe, das die Oberseite der Trägerplatte abdeckt und sich über den Übergangsbereich bis hin in die jeweilige Randseite erstreckt, wird mit einem Klebstoff mit der Trägerplatte verklebt. Als besonders vorteilhaft hat es sich erwiesen, wenn der Klebstoff schwarz gefärbt ist. Durch die Wahl eines solchen Klebstoffs ist der Vorteil erhalten, dass die oftmals von der schwarzen Farbe abweichende Farbe der Trägerplatte nicht durch die Kohlefasergewebestruktur hindurch schimmern kann. Der Klebstoff hat somit eine farbgebende oder farbbeeinflussende Funktion. Zugleich wird der flüssige Klebstoff beim Auflegen des Kohlefasergewebes in das Kohlefasergewebe hineingesaugt und sorgt zumindest in einem unteren Bereich des Kohlefasergewebes für eine Stabilisierung der einzelnen Gewebefasern. Als Klebstoff können verschiedenste Typen zur Anwendung kommen. Als besonders bevorzugt hat sich jedoch Epoxidharz erwiesen, das schwarz eingefärbt ist.

Das auf der Trägerplatte aufgeklebte Kohlerfasergewebe ist von außen her mit einem Lack, insbesondere mit einem Polyurethanlack (PU-Lack) lackiert. Diese Lackierung sorgt dafür, dass auch von außen her die einzelnen Fasern des Kohlefasergewebes gegeneinander stabilisiert werden, wodurch sich eine durchgängige Verstärkung und Verhärtung des Kohlefasergewebes insbesondere auch auf der Oberfläche des Kohlefasergewebes ergibt. Nach Aushärtung des PU-Lacks bekommt die Platte das typische Aussehen einer harten Kohlefasergewebeoberfläche. Der PU-Lack erlaubt es jedoch auch, die Optik bzw. das optische Erscheinungsbild der Oberfläche des Kohlefasergewebes entsprechend zu beeinflussen, indem ein PU-Lack mit dem gewünschten Glanzgrad gewählt wird, so dass die Kohlefasergewebeoberfläche hinsichtlich ihres optischen Erscheinungsbildes von ultramatt bis hochglänzend hergestellt werden kann.

### FIGURENKURZBESCHREIBUNG

Die Erfindung wird im Folgenden unter Hinweis auf die beigefügten Figuren anhand von Ausführungsbeispielen noch einmal näher erläutert, auf welches die Erfindung jedoch nicht beschränkt ist. Dabei sind in den verschiedenen Figuren gleiche Komponenten mit identischen Bezugszeichen versehen. Es zeigen auf schematische Weise:
- Fig. 1: in perspektivischer Ansicht einen Querschnitt der erfindungsgemäße Platte gemäß einem ersten Ausführungsbeispiel der Erfindung;
- Fig. 2: ein Detail der Platte gemäß der Figur 1;
- Fig. 3: ein weiteres Detail der Platte gemäß der Figur 1;
- Fig. 4: ein zweites Ausführungsbeispiel der erfindungsgemäßen Platte;
- Fig. 5: ein drittes Ausführungsbeispiel der erfindungsgemäßen Platte;
- Fig. 6: ein viertes Ausführungsbeispiel der erfindungsgemäßen Platte;
- Fig. 7: ein fünftes Ausführungsbeispiel der erfindungsgemäßen Platte;
- Fig. 8: einen Verfahrensschritt eines erfindungsgemäßen Verfahrens durchgeführt mit einer erfindungsgemäßen Vorrichtung zur Herstellung der Platte gemäß der Figur 1;
- Fig. 9 bis 12: weitere Verfahrensschritte des Verfahrens und Details der Vorrichtung.

### BESCHREIBUNG DER AUSFÜHRUNGSBEISPIELE

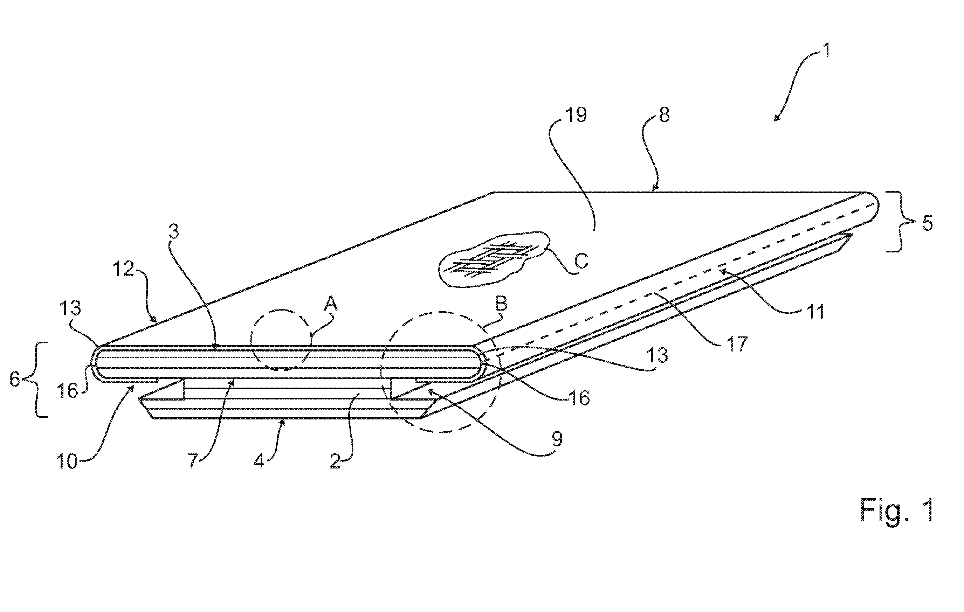

In der Figur 1 ist eine Bodenplatte, oft auch Bodenbelagsplatte bezeichnet, nachfolgend kurz Platte 1 genannt, dargestellt. Die Platte 1 weist als eine Trägerplatte 2 eine aus mehreren Holzschichten aufgebaute Multiplexplatte auf. Die Trägerplatte 2 ist durch eine Oberseite 3 und eine Unterseite 4 und eine in Längsrichtung der Platte 1 verlaufende erste Randseite 5 und eine zu der ersten Randseite 5 parallel verlaufenden zweite Randseite 6 und eine quer zu den Randseiten 5 und 6 verlaufende aus der Zeichenebene der Figur 1 herausschauende erste Stirnseite (nicht dargestellt) und eine in die Zeichenebene der Figur 1 hineinschauende zweite Stirnseite 8 (nicht sichtbar) begrenzt. Die beiden Stirnseiten sind kürzer als die beiden die Längsseiten der Platte 1 bildenden Randseiten 5 und 6 und weisend - von der unterschiedlichen Länge abgesehen - gleiche Markmale wie die beiden Randseiten 5 und 6 auf. Beide Stirnseiten verlaufen normal zu den Randseiten 5 und 6.

In der ersten Randseite 5 ist eine erste Nut 9 und in der zweiten Randseite 6 eine zweite Nut 10 ausgebildet. Zudem weist die Trägerplatte 2 einen ersten Übergangsbereich 11 zwischen der Oberseite 3 und der ersten Randseite 5 sowie einen zweiten Übergangsbereich 12 zwischen der Oberseite 3 und der zweiten Randseite 6 auf.

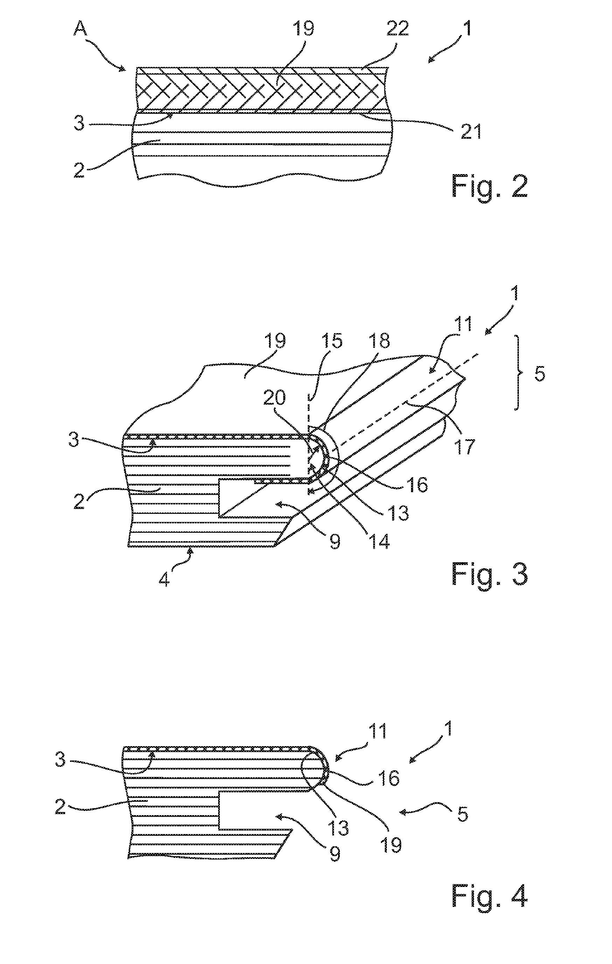

In der Figur 1 ist ein Querschnitt 7 dargestellt, der in Normalenrichtung zur Oberseite 3 und zu den beiden Randseiten 5 und 6 verläuft. In seinem Querschnitt 7 weist der jeweilige Übergangsbereich 11, 12 eine Kurve auf, die im vorliegenden Fall durch den Bogen 13 eines Kreissegments 14 gegeben ist. Figur 3 zeigt das in der Figur 1 markierte Detail B, das den Bogen 13 im Detail darstellt. Wie dort ersichtlich, erstreckt sich der Bogen 13 gemessen von der lotrechten Richtung 15 (0°) in Bezug auf die Oberseite 3 in einem Winkelbereich bis 180°. Der Bogen 13 weist einen Scheitelpunkt 16 auf, der in Bezug auf die ebene Erstreckung der Platte 1 an der jeweiligen Randseite 5, 6 am weitesten außen liegt.

Die in der Figur 1 dargestellte Platte 1 weist auch ein auf der Trägerplatte 2 aufgebrachtes Kohlefasergewebe 19 auf, von dem nur ein Bereich in einem Ausschnitt B visualisiert ist. Wie in der Figur 1 bzw. der Figur 3 deutlich zu sehen ist, erstreckt sich das Kohlefasergewebe 19 entlang der Oberseite 3 und bis über den Scheitelpunkt 16 des Bogens 13 nach unten in Richtung der Unterseite 4 hinweg. Da im vorliegenden Ausführungsbeispiel der Bogen 13 in der jeweiligen Nut 9, 10 mündet, erstreckt sich auch das Kohlefasergewebe 19 bis in die jeweilige Nut 9, 10. An der Position des Scheitelpunktes 16 verläuft an der Außenseite des Kohlerfasergewebes 19 in der horizontalen Ebene entlang der ersten Randseite 5 eine Stoßkante 17. Gleiches gilt auf analoge Weise für die zweite Randseite 6. Werden mehrere Platten 1 aneinander gefügt, berühren sich die Platten 1 jeweils genau an ihren Stoßkanten 17.

Das in der Figur 3 dargestellte Kreissegment 14 weist einen Radius 20 von 6 mm auf. Die Dicke der Trägerplatte 2 gemessen in besagter lotrechter Richtung 15 beträgt im vorliegenden Fall 18 mm.

In Figur 2 ist das in der Figur 1 dargestellte Detail A der Platte 1 visualisiert. In dieser Detailansicht ist ein Ausschnitt der Trägerplatte 2 zu sehen. Zudem ist das auf der Oberseite 3 aufliegende Kohlefasergewebe 19 zu sehen. Das Kohlefasergewebe 19 ist mit einem auf die Trägerplatte 2 aufgebrachten schwarz gefärbten Epoxidharzkleber auf die Trägerplatte 2 aufgeklebt. Die nach links oben verlaufende Schraffur deutet an, dass das Epoxidharz 21 zumindest bereichsweise in das Kohlefasergewebe 19 eingesaugt wurde und dort ausgehärtet ist. Das Kohlefasergewebe 19 ist von seiner Außenseite her mit einem PU-Lack 22 lackiert. Die von links oben nach schräg rechts unten auslaufende Schraffur deutet an, dass der PU-Lack von außen her in das Kohlefasergewebe 19 hineingesaugt wurde und dort ausgehärtet ist.

In der Figur 4 ist ein zweites Ausführungsbeispiel der Platte 1 bzw. genau genommen der Ausschnitt B der Platte 1 dargestellt. Im vorliegenden Fall endet das Kohlefasergewebe 19 an der ersten Randseite 5 knapp unterhalb des Scheitelpunkts 16 und ist dort auch mit der Trägerplatte 2 verklebt. Gleiches gilt sinngemäß auch für die nicht dargestellte zweite Randseite 6, was in Folge auch auf die Ausführungsbeispiele gemäß den Figuren 4 bis 7 zutrifft.

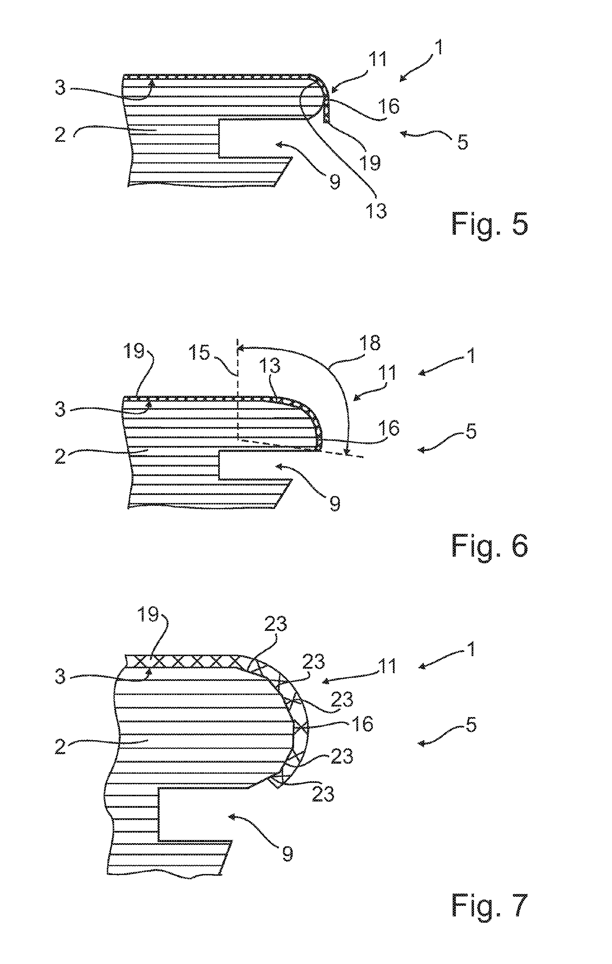

Im Unterschied zu dem in der Figur 4 dargestellten Sachverhalt zeigt das in Figur 5 dargestellte dritte Ausführungsbeispiel dass das Kohlefasergewebe 19 unterhalb des Scheitelpunkts 16 nicht mehr mit der Trägerplatte 2 verklebt ist, sondern unterhalb des Scheitelpunkts 16 lose herunterhängt. Im vorliegenden Fall würde das Einführen der Feder in die erste Nut 9 nicht dazu führen, dass das Kohlefasergewebe 19 in die Nut hineingezogen wird. Für den Fall, dass dies erwünscht ist, müsste das Kohlefasergewebe 19 weiter in den Bereich der Nut 9 herunterhängen, also größer dimensioniert werden.

Das in der Figur 6 dargestellte weitere Ausführungsbeispiel zeigt eine Kurve 13, bei der sich ausgehend von der lotrechten Richtung 15 der Radius der Kurve kontinuierlich verringert, wobei sich der Bogen 13 in einem Winkelbereich 18 von der lotrechten Richtung 15 (0°) bis hin zu 91° erstreckt. Folglich erstreckt sich auch in diesem Ausführungsbeispiel das Kohlefasergewebe 19 bis über den Scheitelpunkt 16 hinweg und endet im vorliegenden Fall direkt an der jeweiligen Nut 9, 10.

Bei dem in der Figur 7 dargestellten Ausführungsbeispiel weist der Querschnitt des Übergangsbereichs 11 eine an eine Kurve angenäherte Form auf, die durch Aneinanderreihung von ebenen Flächensegmenten 23 realisiert ist. Das Kohlefasergewebe 19 endet im Mündungsbereich der jeweiligen Nut 9, 10.

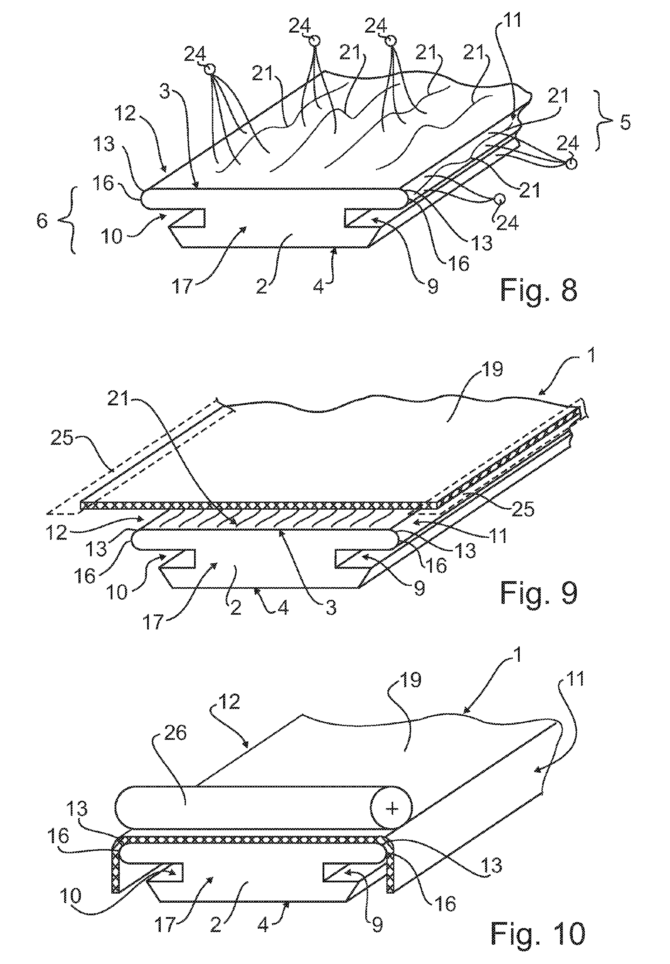

Nachfolgend wird auf ein erfindungsgemäßes Verfahren und stark schematisiert eine erfindungsgemäße Vorrichtung zum Herstellen besagter Platte 1 eingegangen. In den Figuren 8 bis 12 wurde aus Gründen der Übersichtlichkeit auf die Darstellung der Schichtstruktur in der Trägerplatte 2 verzichtet.

Nicht dargestellt ist in den Figuren 8 bis 12 ein initialer Bearbeitungsschritt des Verfahrens, bei dem die im Übergangsbereich zwischen ihrer Oberseite 3 und der jeweiligen Randseite 5 bzw. 6 ursprünglich scharfkantig ausgebildete Trägerplatte 2 bearbeitet wird. Dabei kommt ein Fräswerkzeug einer Formgebungsstufe (beide nicht dargestellt) zum Einsatz. Mit Hilfe des Fräswerkzeugs wird in dem Übergangsbereich 11 und 12 besagte Kurve oder optional die an die Kurve angenäherte Form im Querschnitt des Übergangsbereichs 11, 12 erzeugt.

In einem weiteren Arbeitsschritt erfolgt das Aufbringen des Kohlefasergewebes 19 auf die Trägerplatte 2. Dabei wird - bevor die Trägerplatte 2 mit dem Kohlefasergewebe 19 belegt wird - der Klebstoff 21 auf der Trägerplatte 2 entlang der Oberseite 3 und entlang des Übergangsbereichs 11, 12 bis in die Nut 9, 10 hinein aufgetragen. Das Auftragen des Klebstoffs 21 erfolgt mit Hilfe von in Figur 8 schematisch dargestellten Düsenköpfen 24. Im Rahmen der Erfindung würde es auch ausreichen, wenn der Klebstoff 21 nur bis hin zu dem Scheitelpunkte 16 aufgetragen wird.

Das Belegen der Trägerplatte 2 mit dem Kohlefasergewebe 12 ist stark schematisiert in der Figur 9 dargestellt ist. Dort ist ein eben ausgebreitetes Kohlefasergewebe 19 dargestellt, das an seinem linken und rechten Rand mit nur schematisch angedeuteten Greifarmen 25 gehalten wird und mit Hilfe der Greifarme 25 auf die Oberseite 3 der Trägerplatte 2 aufgelegt wird.

Wie in der Figur 10 dargestellt, wird das Kohlefasergewebe 19 mit Hilfe einer Walze 26 an die Trägerplatte 2 angewalzt. Um auf eine gute Haftung im Übergangsbereich bis hin zu dem Scheitelpunkt 16 zu erhalten, können noch weitere in der Figur 10 nicht dargestellte Walzen z.B. entlang der Randseiten 5 und 6 und / oder entlang der Übergangsbereiche 11 und 12 zum Einsatz kommen. Im Verlauf des Anwalzens kann das Kohlefasergewebe 19 links und rechts frei herabhängen oder mit Hilfe der in der Figur 9 dargestellten Greifzangen 25 unter Zugkrafteinwirkung nach unten gezogen werden, was zu einer Vorspannung im Kohlefasergewebe 19 führt.

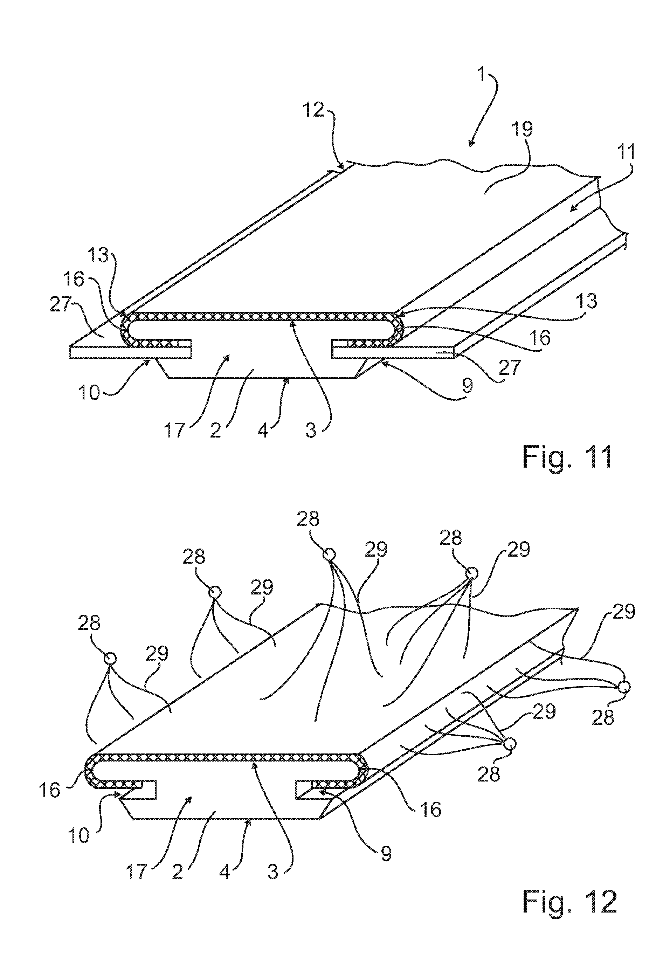

Noch bevor der Klebstoff 21 aushärtet, erfolgt ein Einziehen oder Hineindrücken des sich bis über den Scheitelpunkt 16 hinweg erstreckenden Kohlefasergewebes 19 in die erste Nut 9 und die zweite Nut 10, was schematisch in der Figur 11 dargestellt ist. Bei diesem Vorgang kommen Balken 27 zum Einsatz, die ähnlich geformt sind wie die Federelemente, die beim Verlegen der Platte 1 zur Anwendung kommen. In dieser Position eingespannt, wird der Klebstoff 21 ausgehärtet. Danach werden die Balken 27 entfernt.

Nach der Trocknung des Klebstoffs 21 wird die Außenseite des Kohlefasergewebe 19 mit einem im vorliegenden Fall hochglänzenden PU-Lack 29 lackiert, der in ausreichender Menge aufgetragen wird, so dass sich das Kohlefasergewebe 19 im Wesentlichen durchgängig mit dem PU-Lack 29 voll saugen kann. Dies erfolgt wie in der Figur 12 schematisch dargestellt über Düsenköpfe 28, von denen der PU-Lack 29 abgegeben wird. Nachdem der PU-Lack 29 ausgehärtet ist, zeigt die Oberfläche des Kohlefasergewebes 19 die typische Kohlefasergewebestruktur mit entsprechender mechanischer Härte und dem gewünschten optischen Glanzeffekt.

Die so hergestellte Platte 1 ist nun zum Verlegen mit anderen Platten 1 bereit.

Das zuvor beschriebene Verfahren kommt in einer Vorrichtung zum Herstellen der Platte 1 zum Einsatz, die als einen wesentlicher Bestandteil eine Aufbringungsstufe zum Aufbringen des Kohlefasergewebes 19 auf der Trägerplatte 2 aufweist. Bestandteile dieser Aufbringungsstufe können z.B. sein: die ersten Düsenköpfe 24, die zweiten Düsenköpfe 28, die Greifarme 25, die Walze bzw. die Walzen 26 sowie die Balken 27. Eine solche Aufbringungsstufe kann auch weitere Mittel (nicht dargestellt) wie beispielsweise eine Trocknungseinrichtung zum Trocknen des PU-Lackes 29 oder des Klebstoffs 21 aufweisen. Mit Hilfe der in der Figur 8 dargestellten ersten Düsenköpfe 24 und eines nicht dargestellten Klebstofftanks und einer entsprechend ausgebildeten Steuereinrichtung ist die Aufbringungsstufe zum Aufbringen des Klebstoffs 21, so wie im Zusammenhang mit der Figur 8 erörtert, ausgebildet. Besagte Steuerstufe kann auch das Verhalten der Greifarme 25 sowie den Betrieb der Walze 26 steuern. Die Steuerstufe kann auch das Verhalten der Balken 27 steuern, so dass die Aufbringungsstufe zum Einziehen oder Hineindrücken des sich bis über den Scheitelpunkt 16 hinweg erstreckenden Kohlefasergewebes 19 in die von der Oberseite 3 in einem Abstand lokalisierte Nut 9 und 10 in der Randseite 5 bzw. 6 ausgebildet ist. Mit Hilfe der in der Figur 12 dargestellten zweiten Düsenstufe 28, einer damit gekoppelten weiteren Tankeinrichtung, in der sich der PU-Lack 29 befindet und besagter Steuerstufe ist die Aufbringungsstufe auch zum kontrollierten Abgeben und Aufbringen des PU-Lacks 29, also zum Lackieren des Kohlefasergewebes 19 mit dem PU-Lack 29 ausgebildet. Die Vorrichtung kann auch einen beweglichen Schlitten oder einen Tisch aufweisen, um die Platte 1 bzw. die Trägerplatte 2 an den Düsen 24 und 28 und / oder der Walzen 26 vorbeizubewegen. Ähnliches lässt sich auch mit einem Förderband bewirken.

Auch wenn nicht im Detail angeführt, gelten die für die beiden Randseiten 5 und 6 angeführten Angaben zum Verfahren und zur Herstellungsvorrichtung auf analoge Weise auch für die beiden Stirnseiten.

Es sei an dieser Stelle jedoch erwähnt, dass besagte Stirnseite auch anders ausgebildet sein kann, wie z.B. mit einer Nut, jedoch ohne dem dezidierten Übergangsbereich, wobei dann eine obere Kante der Platte 1 gebrochen oder mit einer leichten Fase versehen ausgebildet sein kann.

Eine derart hergestellte Bodenplatte 1 mit Karbonoptik kann beispielsweise DIN-Formate in den Größen 250 x 1200 x 15 mm, 250 x 2500 x 15 mm oder 250 x 5000 x 15 mm aufweisen. Auch sind Steinplattenformate wie beispielsweise 600 x 1200 x 15 mm möglich. Zudem lassen sich Wunschformate mit einer Breite von bis zu 1150 mm und mit einer Länge von bis zu 8000 mm erzeugen. Auch können dreieckige oder auch mehr als viereckige Strukturen realisiert werden.

Zusammenfassend ermöglicht die vorstehend erörterte Erfindung die Herstellung von Platten 1 für z. B. die Bodenverlegung um einen schwarzen, hochwertig aussehenden Bodenbelag mit Karboncharakteristik zu realisieren.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können individuell offenbarte Merkmale mit anderen Merkmalen kombiniert werden und Proportionen der dargestellten Merkmale variieren, ohne dass von dem Konzept der Erfindung abgewichen wird.

## Patentansprüche

1. Platte (1), insbesondere eine Bodenplatte oder Bodenbelagsplatte, aufweisend
- eine Trägerplatte (2), insbesondere aufweisend eine holzbasierte Multiplexplatte und/oder mitteldichte Faserplatte, die durch eine Oberseite (3) und eine Unterseite (4) und zumindest eine zwischen der Oberseite (3) und der Unterseite (4) verlaufende erste Randseite (5) und eine zweite Randseite (6) begrenzt ist, und
-) ein auf die Trägerplatte (2) aufgebrachtes Kohlefasergewebe (19), wobei
ein Übergangsbereich (11, 12) zwischen der Oberseite (3) und der jeweiligen Randseite (5, 6) in seinem Querschnitt einer Kurve oder einer an eine Kurve angenäherten Form folgt und
sich das Kohlefasergewebe (19) entlang der Oberseite (3) und bis über einen am weitesten außen liegenden Scheitelpunkt (16) der Kurve oder der an die Kurve angenäherten Form hinweg erstreckt.

2. Platte (1) nach Anspruch 2, wobei die jeweilige Randseite (5, 6) eine Nut (9, 10) aufweist und die Kurve oder die an die Kurve angenäherte Form in besagte Nut (9,10) mündet und sich das Kohlefasergewebe (19) bis in die Nut (9, 10) hinein erstreckt.

3. Platte (1) nach Anspruch 1 oder 2, wobei die Kurve durch den Bogen (13) eines Kreissegments (14) gegeben ist, welcher Bogen (13) sich gemessen von der lotrechten Richtung (15) in Bezug auf die Oberseite (3) in einem Winkelbereich (18) größer 90 °, bevorzugt bis 180°, erstreckt.

4. Platte (1) nach Anspruch 3, wobei das Kreissegment (14) einen Radius (20) von 0,5 mm bis 8 mm, bevorzugt 2 mm bis 6 mm, aufweist.

5. Platte (1) nach einem der vorangehenden Ansprüche, wobei das Kohlefasergewebe (19) mit einem Klebstoff (21), bevorzugt einem Epoxiharz, mit der Oberseite (3) der Trägerplatte (2) verklebt ist.

6. Platte (1) nach einem der vorangehenden Ansprüche, wobei das Kohlefasergewebe (19) mit einem PU-Lack lackiert ist.

7. Verfahren zum Herstellen einer Platte (1), insbesondere einer Bodenplatte oder eine Bodenbelagsplatte, wobei die Platte (1) eine Trägerplatte (2), insbesondere aufweisend eine holzbasierte Multiplexplatte und/oder mitteldichte Faserplatte, aufweist und die Trägerplatte (2) durch eine Oberseite (3) und eine Unterseite (4) und zumindest eine zwischen der Oberseite (3) und der Unterseite (4) verlaufende erste Randseite (5) und eine zweite Randseite (6) begrenzt ist und ein Übergangsbereich (11, 12) zwischen der Oberseite (3) und der jeweiligen Randseite (5, 6) in seinem Querschnitt einer Kurve oder einer an eine Kurve angenäherten Form folgt und besagte Kurve oder besagte an die Kurve angenäherte Form einen am weitesten außen liegenden Scheitelpunkt (16) aufweist,
wobei das Verfahren die folgenden Verfahrenschritte aufweist, nämlich:
Aufbringen eines Kohlefasergewebes (19) auf besagte Trägerplatte (2) derart, dass sich das Kohlefasergewebe (19) entlang der Oberseite (3) und bis über besagten Scheitelpunkt (16) hinweg erstreckt.

8. Verfahren nach Anspruch 7, wobei der Verfahrensschritt des Aufbringens - bevor die Trägerplatte (2) mit dem Kohlefasergewebe (19) belegt wird - ein Aufbringen eines Klebstoff (21), bevorzugt ein Epoxiharz, auf der Trägerplatte (2) entlang der Oberseite (3) und entlang des Übergangsbereiches (11, 12) zumindest bis hin zu dem Scheitelpunkt (16) aufweist.

9. Verfahren nach Anspruch 8, wobei der Verfahrensschritt das Aufbringens - einem Aushärten des Klebstoffs (21) zeitlich vorgelagert - ein Einziehen oder Hineindrücken des sich bis über den Scheitelpunkt (16) hinweg erstreckenden Kohlefasergewebes (19) in eine von der Oberseite (3) in einem Abstand lokalisierte Nut (9, 10) in der Randseite (5, 6) aufweist.

10. Verfahren nach einem der Ansprüche 8 bis 9, wobei der Verfahrenschritt des Aufbringens - nach der Trocknung des Klebstoffs (21) - ein Lackieren des Kohlefasergewebes (19) mit einem Lack (29), bevorzugt mit einem PU-Lack, aufweist.

11. Verfahren nach einem der vorangehenden Ansprüche 7 bis 10, aufweisend ein Bearbeiten einer ursprünglichen Form des Übergangsbereiches (11, 12) einer vordimensionierten Trägerplatte (2), insbesondere im Fall der holzbasierten Multiplexplatte bevorzugt mit einem Fräswerkzeug, zwecks Erzeugung von besagter Kurve oder an die Kurve angenäherter Form im Querschnitt des Übergangsbereiches (11, 12).

12. Vorrichtung zum Herstellen einer Platte (1), insbesondere einer Bodenplatte oder Bodenbelagsplatte, aufweisend
- eine Aufbringungsstufe zum Aufbringen eines Kohlefasergewebes (19) auf eine Trägerplatte (2), insbesondere aufweisend eine holzbasierte Multiplexplatte und/oder mitteldichte Faserplatte, wobei die Trägerplatte (2) durch eine Oberseite (3) und eine Unterseite (4) und zumindest eine zwischen der Oberseite (3) und der Unterseite (4) verlaufende erste Randseite (5) und eine zweite Randseite (6) begrenzt ist und ein Übergangsbereich (11, 12) zwischen der Oberseite (3) und der jeweiligen Randseite (5, 6) in seinem Querschnitt einer Kurve oder einer an eine Kurve angenäherten Form folgt und besagte Kurve oder besagte an die Kurve angenäherte Form einen am weitesten außen liegenden Scheitelpunkt (16) aufweist, wobei die Aufbringungsstufe derart ausgebildet ist, dass das aufgebrachte Kohlefasergewebe (19) die Oberseite (3) und besagten Übergangsbereich (5, 6) bis über besagten Scheitelpunkt (16) hinweg abdeckt.

13. Vorrichtung nach Anspruch 12, wobei die Aufbringungsstufe zeitlich vorgelagert dem Aufbringen des Kohlefasergewebes (19) zum Aufbringen von einem Klebstoff (21), bevorzugt einem Epoxiharz, auf der Trägerplatte (2) entlang der Oberseite (3) und entlang des Übergangsbereiches (11, 12) zumindest bis hin zu dem Scheitelpunkt (16) ausgebildet ist.

14. Vorrichtung nach Anspruch 13, wobei die Aufbringungsstufe zeitlich vorgelagert einem Aushärten des Klebstoffs (21) zum Einziehen oder Hineindrücken des sich bis über den Scheitelpunkt (16) hinweg erstreckenden Kohlefasergewebes (19) in eine von der Oberseite (3) in einem Abstand lokalisierte Nut (9,10) in der Randseite (5, 6) ausgebildet ist.

15. Vorrichtung nach einem der Ansprüche 13 oder 14, wobei die Aufbringungsstufe zeitlich nachfolgend an ein Aushärtung des Klebstoffs (21) zum Lackieren des Kohlefasergewebes (19) mit einem Lack (29), bevorzugt mit einem PU-Lack, ausgebildet ist.
